# EUROPEAN PATENT APPLICATION

(11) **EP 4 509 554 A1**
(43) Date of publication of application: **19.02.2025**
(21) Application number: 22947079.4
(22) Date of filing: 20.06.2022
(51) Int. Cl.: C08J 5/04, B29C 70/02, B29C 70/52, B29B 15/12, C08K 3/04, E04C 5/07, E04C 3/29

(54) **POLYMER BAR REINFORCED WITH FIBERGLASS AND GRAPHENE AND METHOD OF PRODUCING SAME**

(71) Applicant: Filho, Sylvio Moretti, 93900-000 Ivoti (BR); Evaldt, Volmei Silveira, 93265-240 Esteio (BR); Neto, Manoel Matias, 93415-550 Novo Hamburgo (BR)
(72) Inventor: Filho, Sylvio Moretti, 93900-000 Ivoti (BR); Evaldt, Volmei Silveira, 93265-240 Esteio (BR); Neto, Manoel Matias, 93415-550 Novo Hamburgo (BR)
(74) Representative: do Nascimento Gomes, Rui
(86) International application number: PCT/BR2022/050223
(87) International publication number: WO 2023/245261

(57) **Abstract**

The present invention relates to a method of manufacturing a reinforced bar made from fiberglass and polymeric resin, the resin being selected from polyester resin and epoxy resin wherein said resin is additionally reinforced with graphene nanoplatelets.

## Description

### FIELD OF THE INVENTION

The present invention relates, in general, to the field of manufacturing reinforced polymeric bars for use in civil engineering. In an additional embodiment, the present invention relates to a method of producing a polymeric bar containing fiberglass and resin reinforced with graphene nanoplatelets for use in the field of civil engineering.

### BACKGROUND OF THE INVENTION

Distinct types of polymeric bars used for reinforcing structures, particularly for use in the field of civil engineering, are known in the art. In particular, long structures such as polymeric support bars produced from fiber and coated with thermosetting resins such as polyester, vinyl ester and epoxy, are known and widely used by those skilled in the art.

In general, fiber-reinforced polymers (FRPs) are produced from structural resins, such as polyester, vinyl ester and epoxy resins, which cover flexible, continuous, and solid reinforcing fibers with small cross sections in relation to their length. Glass fibers are obtained from the fusion of inorganic glass; basalt fibers are obtained by melting basalt rock; carbon fibers are generated by pyrolysis of organic precursor fibers, which contain at least 90% mass of carbon; and aramid fibers are generated from linear fiber-forming polyamides, in which at least 85% amide groups are directly connected with two aromatic rings.

Several standards govern the use of these products, the following being particularly relevant to this technology:
ISO 14406-1:2015
ACI 440.1 R-15 - EUA
ASHTO LFRP2009 - EUA
GOST 31938-2012- Russia
CAN/CSA - S806-02 - Canada
CNR-DT- Italy
Technical Committee CT 303 - IBRACON -ABECE -GT 03 - Concrete structures with reinforcement made of unconventional materials - Brazil.

Several polymeric bars produced from resin and fiberglass are found in the state of the art and will be cited to delimit the state of the art below.

Chinese patent application CN113969042 titled "CERIUM OXIDE-GRAPHENE OXIDE MODIFIED GFRP (GLASS FIBER REINFORCED POLYMER) RIB AND PREPARATION METHOD THEREOF" and filed on November 30, 2021, describes a glass fiber reinforced polymer comprising high silica glass fiber, wherein a plurality of glass fiber units are coated and permeated by vinyl resin containing cerium oxide and graphene oxide in its composition.

Chinese patent application CN108250561 titled "GLASS FIBER AND GRAPHENE HYBRID FILLER FILLED POLYPROPYLENE COMPOSITE MATERIAL AND PREPARATION METHOD THEREOF" and filed on December 29, 2016, discloses a material manufactured from glass fibers coated with a polypropylene-based composite material and a graphene hybrid filler, wherein the compositions of the composite vary in the range of 45-85 parts of polypropylene, 10-50 parts of glass fiber and 0.0001-1 part of graphene, and a method of producing thereof.

Chinese patent application CN105670329 titled "PREPARATION METHOD OF GRAPHENE-MODIFIED GLASS-FIBER-REINFORCED COMPOSITE MATERIAL" and filed on April 5, 2016, discloses a graphene-modified glass fiber-reinforced composite. The preparation method comprises the following steps: pretreating graphene with concentrated acid and adding a silane coupling agent for modification; mixing the modified graphene with polyethylene wax, adding the mixture into a liquid resin, mixing evenly, introducing the mixture into a glass fiber-filled mold under vacuum, and curing to obtain the graphene-modified glass fiber-reinforced resin-based composite material.

Although several compositions of fiberglass-reinforced polymeric bars are known in the state of the art, there is a continuous need for new materials capable of withstanding greater stresses for application in increasingly demanding reinforcement structures.

Thus, the present inventors concluded that the manufacture of a polymeric bar reinforced by fiberglass and containing resin mixed with graphene nanoplatelets obtained improved resistance and economic advantage compared with the materials known in the state of the art.

### SUMMARY OF THE INVENTION

The present invention aims to provide a composite polymeric bar manufactured from a resin reinforced with graphene nanoplatelets and glass fibers. In specific embodiments, the resin used is a polyester resin. In additional embodiments, curing accelerators and fillers, when necessary, can be used.

In additional embodiments, a method is provided for manufacturing polymeric bars containing glass fibers and resin reinforced with nanoplatelets, more specifically, graphene nanoplatelets, by a pultrusion process, which is a continuous manufacturing process using resins, containing or not fillers and/or additives, and flexible reinforcements, such as fiberglass.

More preferably, the reinforcements used in the present invention are based on fiberglass and are divided into "roving" and blanket. As is generally known to a person skilled in the art, "roving" are like cables with hundreds of very fine parallel glass filaments, which are responsible for the tensile strength of the pultruded profile (longitudinal strength).

In an additional embodiment, the glass fiber is type E (E-glass). Type-E fibers are obtained from a mixture of oxides of Si, Al, B, Ca and Mg (calcium alumina borosilicate) and are typically used as reinforcements for thermoplastics due to their low cost compared to the costs of aramid and carbon, and result in improved properties of the materials formed, such as impact resistance and stiffness.

As is well known to one skilled in the art, the type of resin used determines the properties of corrosion resistance, flame retardancy, maximum working temperature and contributes significantly to certain mechanical strength characteristics of the parts, such as impact resistance and fatigue. Several thermosetting resins are processable by pultrusion, each presenting its own chemical resistance characteristics. In a specific embodiment of the present invention, polyester-based resins are used. In other embodiments, the polyester-based resin is an isophthalic resin, in a preferred embodiment, the isophthalic resin is reinforced with graphene nanoplatelets (NPG).

The curing or solidification mechanism of thermosetting liquid resins involves radical, cationic or hybrid polymerization mechanisms with the formation of a highly cross-linked polymeric structure, initiated by supplying an appropriate form of energy, such as heat, light, or electrical potential.

### TECHNICAL PROBLEM

Although numerous technologies, such as those described above for the state of the art, present solutions that reinforce polymeric profiles with glass fibers, the demand for profiles that have high quality and low manufacturing cost still persists. High value-added resins, such as epoxy resins, are normally used in the field of technology. Thus, it is an objective of the invention to provide new profiles comprising glass fiber and resin reinforced with graphene nanoplatelets that have a lower production cost than materials that are known in the state of the art and achieve satisfactory mechanical properties for use in industry, for example, for application in the civil industry.

### ADVANTAGES OF THE INVENTION

In comparison with the polymeric profiles reinforced with glass fiber available in the state of the art, the present invention has as advantages the use of a lower cost resin, such as a polyester resin reinforced with graphene nanoplatelets to achieve similar or improved quality in relation to higher cost resins (for example, epoxy or vinyl ester resin). In an alternative embodiment, a formulation comprising epoxy resin and graphene nanoplatelets is also presented in the examples for illustration purposes. With the addition of graphene nanoplatelets to the polyester/epoxy resin, a product was obtained with identical or superior quality to the products known in the market, but with an even more competitive cost. Tensile strength, modulus of elasticity, and characteristics inherent to thermosetting plastics, such as durability, non-oxidation, electrical and electromagnetic non-conductivity, also obtained satisfactory results, as will be shown throughout this document.

It was surprisingly found by the inventors that the addition of graphene nanoplatelets dispersed in solvent, such as n-methyl-pyrrolidone, in the polyester resin impregnating a reinforcing fiber, such as a glass fiber, provided results in mechanical properties similar (tensile strength) or even superior (modulus of elasticity) to what is required so that said reinforced polymeric bars of the present invention can be used in highly demanding installations, such as those for civil engineering. As will be understood by one skilled in the art, if the dispersion of the nanoplatelets in the resin is done satisfactorily, the same effect can be verified when other polymeric resins are used, such as epoxy resin.

Another advantage of the present invention is the possibility of providing a reinforced polymeric bar to replace steel bars available on the market in various applications, such as CA 50 and CA 60, showing as the main advantage, in addition to the manufacturing cost, the possibility of building lighter structures.

### BRIEF DESCRIPTION OF THE DRAWINGS

The features of various aspects are set forth with particularity in the appended claims. The various aspects, however, as regards both organization and methods of operation together with additional objects and advantages thereof, may be better understood by reference to the description set forth hereinafter, considered in conjunction with the appended drawings, as follows.

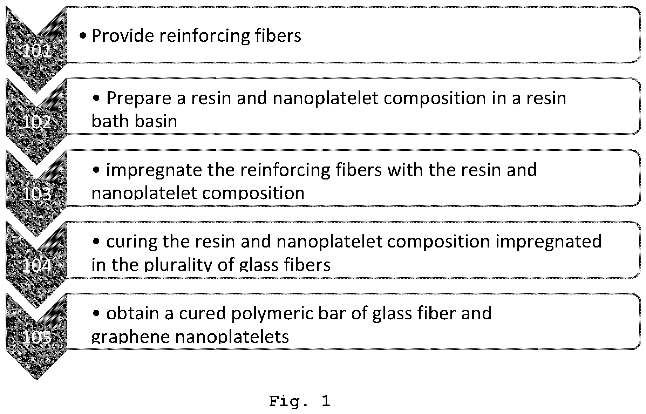

Figure 1 depicts a schematic flowchart of a method for producing a polymeric bar containing glass fibers, according to a first embodiment of the invention.

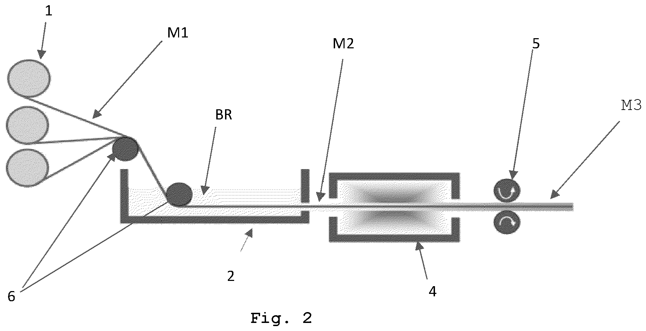

Figure 2 exemplifies a pultrusion process for obtaining polymeric bars containing glass fibers and graphene nanoplatelets, according to an embodiment of the invention.
Figure 3 shows a shelf with a set of fiber roving (1), according to the invention.
Figure 4 shows an exemplary resin bath basin (2) according to the invention.
Figure 5 shows the passage of impregnated fibers through a mold, according to one embodiment of the invention.
Figure 6 shows an exemplary furnace (4) for use in the invention.
Figure 7 shows a fiber traction device (5) according to one embodiment of the invention.
Figure 8 shows an exemplary coiler used to wind the bars obtained (M3) by the method of the present invention.

### DETAILED DESCRIPTION OF THE INVENTION

In a first embodiment of the present invention, there is disclosed a method for producing a polymeric bar comprising coating a plurality of long fibers, such as a fiberglass, with a polymeric composition comprising at least one resin, such as polyester or epoxy, and a reinforcing filler, wherein said method comprises the steps of:
a. providing by means of rollers (1) a plurality of long reinforcing fibers (M1) to be coated with a composition of resin and nanoplatelets (BR) in a pultrusion process to a resin bath basin (2);
b. preparing a resin and nanoplatelets (BR) composition, wherein the nanoplatelets may be present in a proportion of 0.01 to 0.1% by weight of the composition;
c. placing the resin and nanoplatelet composition (BR) in a resin bath basin (2), wherein the resin and nanoplatelet composition is maintained at a temperature ranging from 20 to 30 °C;
d. providing a polymerization furnace (4), said furnace fluidly connected upstream of the resin bath basin (2) and maintained at a temperature between 100 and 170 °C;
e. pulling the plurality of fibers coated by the resin and nanoplatelet composition (M2) by means of a puller (5) fluidly connected downstream of the polymerization furnace (4), wherein the fibers impregnated with the resin and nanoplatelet solution (M2) enter said polymerization furnace (4), remaining therein for a residence time between 2 and 4 minutes until the resin and nanoplatelet composition (BR) is cured, thus forming a cured polymeric bar containing glass fibers and resin with graphene nanoplatelets (M3);
wherein the resin of the resin composition (BR) is chosen from a polyester resin, an epoxy resin, or a vinyl ester resin; and wherein the nanoplatelets are produced from graphene.

In a particular embodiment, the graphene nanoplatelets have a size between 6 and 8 nm. In a particular embodiment, said graphene nanoplatelets are dispersed in a solvent. In a particular embodiment of the invention, the graphene nanoplatelets are received in a solution comprising the graphene nanoplatelets, wherein the solvent used in the solution is n-methyl-pyrrolidone.

In a particular embodiment of the invention, the solvent comprising the graphene nanoplatelets is n-methyl-pyrrolidine NMP CAS No. 872-50-4N of formula C₅H₉NO. One skilled in the art will know that any other solvent suitable for dissolving the nanoplatelets of the present invention can be used alternatively, as long as it does not interfere with the expected properties of the resin composition disclosed in the present invention.

In a particular embodiment, the temperature of the polymerization furnace (4) of step d) depends on the gauges of the bars produced. In a specific embodiment, the gauges have a diameter between 4 and 30 mm.

In an alternative embodiment, the resin of the polymeric composition is a polyester resin, more particularly an isophthalic resin with Neo Pentyl Glycol (NPG).

In a second embodiment of the present invention, there is provided a polymeric bar reinforced with glass fiber and graphene nanoplatelets comprising:
a. a plurality of glass fibers; and
b. a composition of resin and graphene nanoplatelets.

In a preferred embodiment, the ratio of the plurality of glass fibers to the resin and graphene nanoplatelet composition is in the order of 75:25 to 85:15 weight based.

In one embodiment, the nanoplatelets have an average dimension of 6 to 8 nm.

In an exemplary embodiment of the present invention, the preparation of the resin composition comprises the following steps:
a. Weigh 10 to 12 kg of resin and place it in the container;
b. Weigh 200 to 240 g of Calcite and add to the container with the resin;
c. Stir the resin and calcite with a mixer for 10 min;
d. Weigh 80 to 90 g of BPO and add to the mixture;
e. Stir the mixture for 3 min;
f. Weigh 40 to 60 g of cobalt and add to the mixture;
g. Stir the mixture for 3 minutes;
h. Weigh 200 to 300 g of TBP and 10 to 20 g of the graphene solution and add to the mixture;
i. Stir the mixture for 10 minutes;
j. Fill the basin with the stirred mixture resulting from step i).

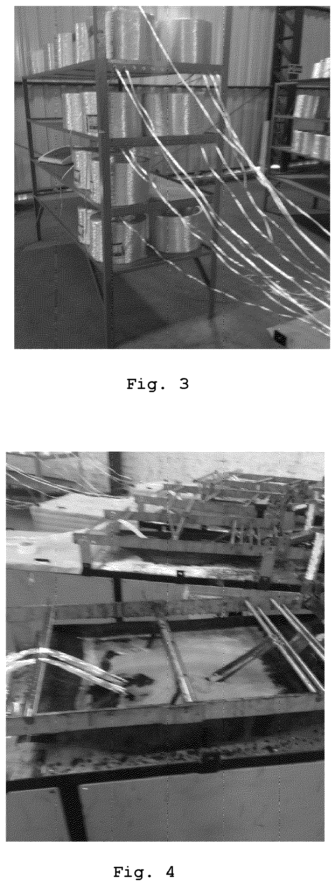

Figure 3 shows a shelf with a set of fiber roving, according to the invention.

Figure 4 shows an exemplary resin bath basin in accordance with the invention.

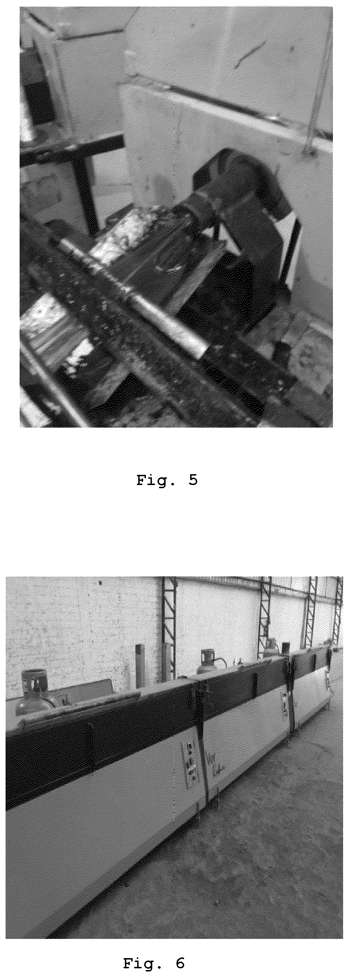

Figure 5 shows the passage of resin-impregnated fibers, according to one embodiment of the invention.

Figure 6 shows an exemplary furnace for use in the invention.

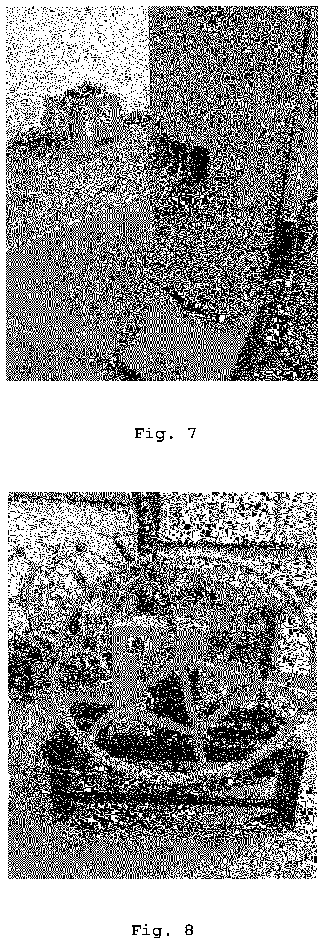

Figure 7 shows a fiber tensioner according to an embodiment of the invention.

Figure 8 shows an exemplary coiler used to wind the bars obtained by the method of the present invention.

### PRACTICAL EXAMPLES

### Example 1:

### Step 1: Preparation of polyester resin and graphene nanoplatelet composition

In an exemplary embodiment of the present invention the following ingredients were mixed to make the resin composition:
a. Isophthalic Polyester Resin with Neo Pentyl Glycol(NPG) - CAS - 100-42-5
b. Tert-butyl peroxybenzoate (TBPB) in its liquid form
   i. Methyl ethyl ketone peroxide - CAS 1338-23-4
   ii. Dimethyl phthalate - CAS 131-11-3
   iii. Methyl ethyl ketone - CAS 78-93-3
c. Tert-butyl peroxybenzoate (TBPB) in its liquid form
   i. Methyl ethyl ketone peroxide - CAS 1338-23-4
   ii. Dimethyl phthalate- CAS 131-11-3
   iii. Methyl ethyl ketone - CAS 78-93-3
d. BPO - Dibenzoyl Peroxide - CAS 94-36-0 50%
   iv. Phthalic Ester- CAS -84-69-5 15-27%
   v. Hydrogenated vegetable oil- CAS 8001-78-3 10-12%
   vi. Nonionic surfactant -CAS - 9038-95-3 8-10%
e. Cobalt - Acepol 6% - Aliphatic solvent CAS 8052-41-3
   vii. Cobalt Octoate CAS 13586-82-8
f. Calcite - Calcium carbonate - Ca Mg (CO₃)₂

Then, graphene nanoplatelets dispersed in N-Methyl-Pyrrolidone (NPM) solvent are added to the resin composition.
i. Graphene CAS - 1034343-98-0 (minimal purity 93.2%, manufactured by UCSGRAFENE)
ii. N-methyl-pyrrolidone (NPM) 872-50-4

In an exemplary embodiment, the amounts of ingredients comprising the resin and graphene nanoplatelet composition are specified in Table 1:

**Table 1: Ingredients for formulating polyester resin and nanoplatelet composition**

| | Ingredients | Quantities (g) | Weigh % regarding to the mixing |
|---|---|---|---|
| 1 | Resin | 12000 | 90-95 |
| 2 | TBPB | 300 | 1-4 |
| 3 | BPO | 84 | 0.2-1.4 |
| 4 | Cobalt | 48 | 0.1-0.8 |
| 5 | Calcite | 240 | 1-10 |
| 6 | Graphene Solution in NPM | 120 | 0.1-2 |

In an even more specific embodiment, the preparation of the composition comprising polyester resin and graphene nanoplatelets is conducted according to the following method:
a. weighing 12 kg of resin and place it in a container;
b. weighing 240 g of Calcite and add to the said container with the resin;
c. stirring the resin and calcite with a mixer for 10 min;
d. weighing 84 g of BPO and add to the mixture;
e. stirring the resulting mixture for 3 min;
f. weighing 48 g of cobalt and add to the mixture;
g. stirring the resulting mixture for 3 minutes;
h. weighing 300 g of TBP and 120 g of graphene nanoplatelets and add to the mixture; and
i. stirring the resulting resin and graphene nanoplatelet composition for 10 minutes

The resulting resin and graphene nanoplatelet composition arranged in a resin bath basin (2) must be maintained at a temperature between 20 and 30 °C.

### Step 2: Impregnation of glass fiber with the composition of resin and graphene nanoplatelets

The impregnation of fiberglass (TEX 2200, 4400 and 8800, from the manufacturers Owens Cornnig, CPIC or Jushi) with the composition of resin and graphene nanoplatelets is done by a pultrusion process, wherein the glass fibers are pulled from their coils (roving), wherein the plurality of fibers passes through bars to remove excess resin and direction (6), which cause the plurality of glass fibers to be kept submerged in the resin bath basin (2), so that the glass fibers (M1) are impregnated with the composition of resin and graphene nanoplatelets prepared according to the process described in the previous step.

In the present example, E-glass fibers were used obtained from a mixture of Si, Al, B, Ca and Mg oxides (calcium alumina borosilicate) and which are normally used as reinforcements for thermoplastics due to their low cost compared to aramid and carbon reinforcements, and result in improved material properties, such as impact resistance and stiffness.

The type of resin used determines the properties of corrosion resistance, flame retardancy, maximum working temperature and contributes significantly to certain mechanical strength characteristics of the parts, such as impact resistance and fatigue. Several thermosetting resins are processable by pultrusion, each presenting its own chemical resistance characteristics. In the present invention, isophthalic polyester resins with NPG were used. Other resins, such as epoxy and vinyl ester, could also be used in the present composition.

The residence time of the plurality of glass fibers (M1) in the resin and graphene nanoplatelets (BR) composition is adjusted to be in a range of 10-12 min.

### Step 3: Curing process of polymeric bar reinforced with glass fiber and graphene nanoplatelets

The fiber impregnated with the resin and graphene nanotube composition is then pulled by a puller (5) from the resin bath basin towards a polymerization furnace (4), in which the resin and nanoplatelet composition impregnated between the plurality of glass fibers is cured, thus forming a polymeric bar reinforced by glass fiber and graphene nanoplatelets (M3).

Upstream of the polymerization furnace (5) is located a mold (not shown), through which the plurality of impregnated glass fibers (M2) pass before entering the polymerization furnace (5), said mold (not shown) defining the dimensions of the cured polymer bar (M3) that will exit downstream of the polymerization furnace (5).

By the pultrusion process, the cured polymeric bar (M3) is formed as a continuous flexible bar, which can then be wound onto a coiler (not shown) for storage and/or future commercialization.

### Example 2:

In an alternative embodiment to Example 1, the present Example 2 uses an epoxy resin as the manufacturing resin. In a more specific embodiment, the reinforced resin is prepared according to Table 2 below:

**Table 2: Composition for production of reinforced resin as per Example 2.**

| Product | Quantity (kg) |
|---|---|
| Araldite GY 260 | 10 |
| Aradur HY 2918 | 7 |
| Accelerator 960-1 | 0.5 |
| Araldite DY- E | 0.5 |
| Graphene | 0.01 |

Wherein the products in Table 2 have the following technical specifications:
a. Araldite^{®} GY 260: Unmodified, high viscosity, liquid epoxy resin formulated based on Bisphenol. CAS No. 25068-38-6.
b. Aradur^{®} HY 2918 or Araldite^{®} CW 1457-2. Methyltetrahydrophthalic anhydride. CAS No. -11070-44-3 90 - 100
c. Accelerator 960-1. Tertiary amine accelerator for high ambient temperature and epoxy curing systems. Components:
   i. 2,4,6-tris(dimethylaminomethyl)phenol (CAS No. 90-72-2). Concentration 70-90 (% w/w)
   ii. bis[(dimethylamino)methyl]phenol (CAS No. 71074-89-0). Concentration of 10-20 (% w/w)
d. Araldite^{®} DY-E: Oxirane, mono[(C12-14-alkyloxy)methyl]-glycidylether derivatives of C12-C14 alcohols (CAS No. 68609-97). Concentration 90-100 (% w/w)
e. Graphene: nanoplatelets in solution as specified previously in Example 1.

In an even more specific embodiment, the preparation of the composition comprising epoxy resin and graphene nanoplatelets is conducted according to the following method:
a. Heat the Araldite GY 260 epoxy resin to a temperature of 45 to 55 °C;
b. Weigh 10 kg of heated Araldite GY 260 resin;
c. Weigh 7 kg of the Aradur HY 2918 component;
d. Mix the Araldite GY 260 and Aradur HY 2918 resin, and stir in a rotary mixer for 3 minutes;
e. Weigh 0.5 kg of the 960-1 Accelerator;
f. Weigh 0.5 kg of Araldite DY-E;
g. Weigh 100 ml of the graphene solution;
h. Add 0.5 kg of Accelerated 960-1, 0.5 kg of Araldite DY-E and 100 ml of the graphene solution to the prestirred mixture of Araldite GY260 and Aradur HY 2913;
i. Stir all components for 3 min;
j. Place the finished resin in the basin to start the pultrusion process.

### RESULTS

Polyester polymeric bars reinforced with glass fiber and graphene nanoplatelets were tested for their mechanical properties and obtained satisfactory results.

The properties of the bars obtained were analyzed by taking 10 specimens extracted from polymeric bars reinforced with fiberglass and graphene, manufactured according to the method of the present invention, provided to the Technological Institute in Performance and Civil Construction - itt Performance of the University of Vale do Rio dos Sinos on November 10, 2021. The tensile strength properties, tensile modulus of elasticity and effective diameter of polymeric bars reinforced with fiberglass and graphene described in item 4 were analyzed, in accordance with ASTM D7205: 2006 and ASTM D792: 2020.

For the density test, 5 samples were analyzed to determine this average property.

**Table 3 - Density results for graphene nanoplatelet reinforced polyester bars prepared according to Example 1.**

| **ittP #** | **a (g)** | **b (g)** | **D23C (kg/m³)** | **D23C_{med} (kg/m³)** | **sn-1 (kg/m³)** | **CV (%)** | **Ø_{ef} (mm)** | **Ø_{ef,med} (mm)** |
|---|---|---|---|---|---|---|---|---|
| 7805 -11 | 9.85 | 4.82 | 1953 | 1968 | 26.5 | 1.0 | 7.17 | 7.14 |
| 7805 -12 | 9.80 | 4.90 | 1966 | | | | 7.10 | |
| 7805 -13 | 9.68 | 4.86 | 2001 | | | | 7.09 | |
| 7805 -14 | 9.17 | 4.42 | 1928 | | | | 7.22 | |
| 7805 -15 | 9.17 | 4.51 | 1963 | | | | 7.15 | |

| | | | | | | | | |
|---|---|---|---|---|---|---|---|---|
| wherein: - a = air-dry mass in g - b = mass completely submerged in water in g - D23C = density of each sample in kg/m³ - D23C_{med}= average density of the samples in kg/m³ - Sn-1 = sample standard deviation - CV = coefficient of variation of results - Ø_{ef} = effective diameter of each sample in mm - Ø_{ef, med} = effective diameter of samples in mm | | | | | | | | |

For the tensile strength test, 5 samples were analyzed to determine this average property.

**Table 4 - Results of tensile strength**

| **ittP #** | **Ø_{ef , med} (mm)** | **Pₘₐₓ (N)** | **Fₜᵤ (Mpa)** | **F_{tu , med} (Mpa)** | **sₙ₋₁ (Mpa)** | **CV (%)** |
|---|---|---|---|---|---|---|
| 7805 - 6 | 7.14 | 33970 | 847.3 | 817.6 | 21.3 | 3.0 |
| 7805 - 7 | | 31820 | 793.7 | | | |
| 7805 - 8 | | 32920 | 821.2 | | | |
| 7805 - 9 | | 33080 | 825.1 | | | |
| 7805 - 10 | | 32090 | 800.5 | | | |

| | | | | | | |
|---|---|---|---|---|---|---|
| wherein: - Ø_{ef, med} = effective diameter of samples in mm - Pₘₐₓ = maximum load applied to the specimens - Fₜᵤ = tensile strength of specimens - F_{tu,med} = average resistance of specimens - sₙ₋₁ = sample standard deviation - CV = coefficient of variation of results | | | | | | |

For the static modulus of elasticity test, 5 samples were analyzed to determine this average property.

**Table 5 - Results of static modulus of elasticity**

| **ittP 3** | **E_{chord} (Gpa)** | **E_{chord, med} (Gpa)** | **sₙ₋₁ (Gpa)** | **CV (%)** |
|---|---|---|---|---|
| 7805 - 1 | 87.20 | 81.3 | 3.85 | 5.00 |
| 7805 - 2 | 78.90 | | | |
| 7805 - 3 | 79.80 | | | |
| 7805 - 4 | 83.00 | | | |
| 7805 - 5 | 77.60 | | | |

| | | | | |
|---|---|---|---|---|
| wherein: - E_{chord} = tensile modulus of elasticity of the specimens - E_{chord,med} = average of the results of modulus of elasticity - sₙ₋₁ = sample standard deviation - CV = coefficient of variation of results | | | | |

### Tensile strength and modulus of elasticity of the bar obtained in comparison with the minimum requirements for use in civil engineering

The bars obtained were analyzed in accordance with current standards and obtained the following results for tensile strength and modulus of elasticity:

**Table 6: Resistance obtained by the polymeric bar according to the present invention**

| Proprieties evaluated | Fiberglass and nanoplatelets reinforced polymeric bar | Minimum requirements for civil engineering (ASTM, ACI 440) |
|---|---|---|
| Tensile strength (MPa) | 817.6 | Min. 800 |
| Modulus of elasticity (Gpa) | 55 | Min. 40 |

It can be seen from the data shown in Table 5 that the tensile strength and modulus of elasticity results exceed the minimum requirements set out in the ASTM, ACI 440 standard, which confirms that the bars produced by the production process according to the invention can be subjected to great stresses, being for example applicable to civil engineering.

### Comparison between the bars obtained from the invention and state-of-the-art steel bars

The bars obtained by the pultrusion process described in the present document show the following advantages in relation to the CA 50/60 steel bars of the state of the art:

**Table 7: Analysis of the properties of the bars obtained according to the methods of the present invention in comparison with steels available in the state of the art:**

| **Average material properties** | **Steel CA 50/CA 60** | **Invention bar VERGRAF** | **Comparative** |
|---|---|---|---|
| Tensile strength MPa | 450 / 600 | 800 - 1300 | Stronger |
| Linear meter weight 8 mm | 0.395 Kg | 0.080 kg | Lighter |
| Bars size | 12 m | Rolls up to 200 m | Better use |
| Durability built into concrete | 50 years | (+) 100 years | More durable |
| Durability embedded in concrete in aggressiveness classes III and IV | (+/-) 5 years | (+) 100 years | More durable |
| Corrosion resistance | No | Yes | More durable |
| Electrical conductivity | Yes | No | No risk of accidents |
| Thermal conductivity | Yes | No | It does not dissipate heat |
| Concrete covering in aggressiveness classes III and IV | 35 mm-45 mm | 20 mm | Lower volume of concrete |
| Bond strength to concrete (MPa) | 12 | 12 | Similar |
| Modulus of elasticity E (Gpa) | 200 | 50-80 | Lower |
| Compressive strength fc (MPa) | 390 | 300 | Lower |
| Shear strength fv (MPa) | 273 | 160 | Lower |

As can be clearly seen in Table 6, the polymeric bars reinforced with fiberglass and graphene nanoplatelets surpass the technical characteristics of materials normally used in civil engineering for high-stress applications, such as CA 50/CA 60 steel. In addition to the superior resistance of the material obtained according to the invention the low weight (which facilitates logistical transport and storage), resistance to corrosion, low thermal conductivity, among others, stand out.

Embodiments of the present invention have been described above in detail with reference to the drawings, but the specific configuration is not limited to these embodiments and includes, for example, an amendment to a design that falls within the scope that does not depart from the scope of the present invention.

Various modifications are possible within the scope of an aspect of the present invention defined by the claims, and embodiments which are produced by appropriately combining the technical means disclosed according to different embodiments are also included in the technical scope of the present invention. Also included in the technical scope of the present invention is a configuration in which constituent elements, described in the embodiments and having mutually the same effects, are replaced by each other.

## Claims

1. A method for producing a polymeric bar comprising coating a plurality of long fibers with a polymeric composition comprising at least one resin selected from polyester resin and epoxy resin; and at least one reinforcing filler; wherein said method is **characterized by** comprising the steps of:
a. providing, by means of rollers (1), a plurality of long reinforcing fibers (M1) to be coated with a resin composition containing nanoplatelet-type reinforcing filler (BR) in a resin bath basin (2);
b. preparing a resin and nanoplatelet (BR) composition, wherein the nanoplatelets are present in a proportion of 0.01 to 0.1% by weight of the composition.
c. placing the resin and nanoplatelet composition (BR) in a resin bath basin (2), wherein the resin and nanoplatelet composition is maintained at a temperature ranging from 20 to 30 °C;
d. providing a polymerization furnace (4), said furnace fluidly connected upstream of the resin bath basin (2) and maintained at a temperature between 100 and 170 °C;
e. pulling the plurality of fibers coated with the resin and nanoplatelet composition (M2), by means of a pulling device (5) fluidly connected downstream of the polymerization oven (4), wherein the fibers impregnated with the resin and nanoplatelet solution (M2) enter said polymerization furnace (4), remaining therein for a residence time between 2 to 4 minutes until the resin and nanoplatelet composition (BR) is cured, thus forming a cured polymeric bar of fiberglass with graphene nanoplatelets (M3);
wherein nanoplatelets are produced from graphene.

2. The method according to claim 1, **characterized in that** the graphene nanoplatelets are sized between 6 and 8 nm.

3. The method according to claim 1 or 2, **characterized in that** said graphene nanoplatelets are dispersed in a solvent.

4. The method according to claim 3, **characterized in that** the solvent comprising the graphene nanoplatelets is n-methyl-pyrrolidine.

5. The method according to any one of the previous claims, **characterized in that** the polyester resin is an isophthalic resin with Neo Pentyl Glycol (NPG).

6. A polymeric bar comprising fiberglass impregnated with a composition comprising resin and at least reinforcing filler, **characterized in that** the resin is selected from polyester resin and epoxy resin; said resin composition comprising graphene nanoplatelets in an amount of 0.01 to 0.1% by weight in relation to the weight of the composition comprising resin.

7. The polymeric bar according to claim 6, **characterized in that** the proportion of the plurality of glass fibers in relation to the composition of resin and graphene nanoplatelets is in the order of 75:25 to 85:15 based on weight.

8. The polymeric bar according to claim 6, **characterized in that** the nanoplatelets have an average dimension of 6 to 8 nm.

9. The polymeric bar **characterized by** being obtained by the method, as defined by claim 1.

10. The polymeric bar according to any one of claims 6 to 9, **characterized in that** the polymeric bar has a tensile strength greater than 800 MPa and an elasticity modulus greater than 50 Gpa.

11. The polymeric bar according to any one of claims 6 to 9, **characterized by** being for use in buildings or civil engineering.

12. The polymeric bar according to any one of claims 6 to 9, **characterized in that** it is produced by a pultrusion process.

13. The polymeric bar according to any one of claims 6 to 12, **characterized in that** the resin is a polyester resin.

14. The polymeric bar according to any one of claims 6 to 12, **characterized in that** the resin is an epoxy resin.
